# EUROPÄISCHE PATENTSCHRIFT

(11) **EP 0 446 572 B1**
(45) Veröffentlichungstag und Bekanntmachung des Hinweises auf die Patenterteilung: **11.01.1995**
(21) Anmeldenummer: 91100348.1
(22) Anmeldetag: 12.01.1991
(51) Int. Cl.: H01R 9/24

(54) **Anschlussleiste für die Fernmelde- und Datentechnik**
Telecommunications and data systems engineering terminal block
Bloc de connexion pour technique des télécommunications et de l'informatique

(30) Priorität: 13.03.1990 DE 4008388; 13.03.1990 DE 4008386
(43) Veröffentlichungstag der Anmeldung: 18.09.1991
(73) Patentinhaber: KRONE Aktiengesellschaft, D-14167 Berlin (DE)
(72) Erfinder: Taybl, Christa, W-1000 Berlin 33 (DE); Müller, Manfred, W-1000 Berlin 65 (DE); Gerke, Dieter, W-1000 Berlin 27 (DE); Bülow, Harald, W-1000 Berlin 41 (DE)

(56) Entgegenhaltungen:
- DE-A- 3 938 351
- GB-A- 2 158 303
- US-A- 4 820 186
- US-A- 4 846 735

## Beschreibung

Die Erfindung bezieht sich auf eine Anschlußleiste zum Anschluß von isolierten Kabeladern, insbesondere von Kabeladern der Fernmelde- und Datentechnik, gemäß dem Oberbegriff des Anspruches 1.

Eine Anschlußleiste der gattungsgemäßen Art ist aus der DE-C-32 01 894 vorbekannt. Diese besteht aus drei Leistenkörpern, die übereinanderliegend auf Zungen aufgesteckt sind, die durch Rasteinrichtungen an den beiden Stirnseiten der Leistenkörper hindurchragen. Der obere und der untere Leistenkörper sind mit Schneid-Klemm-Kontaktelementen versehen, die hintereinanderliegend in einer Reihe angeordnet sind. Jedes Schneid-Klemm-Kontaktelement besitzt zwei federnde Kontaktschenkel, die einen mittig liegenden Kontaktschlitz begrenzen. Eine anzuschließende isolierte Kabelader wird mittels eines Werkzeuges in den Kontaktschlitz eingedrückt, wobei die scharfen Kanten der Kontaktschenkel die Isolierung der Kabelader durchschneiden und eine elektrische Kontaktverbindung mit dem leitenden Kern der Kabelader herstellen. Das Einlegen und Eindrücken der isolierten Kabelader in den Kontaktschlitz erfolgt von der Oberseite eines jeden Leistenkörpers in Richtung auf dessen Unterseite. Zum Anschluß der Kabelader muß daher die Oberseite bzw. die Anschalteseite jedes Leistenkörpers frei zugänglich sein. Bei der vorbekannten Anschlußleiste besteht der Nachteil, daß beim Anschluß der isolierten Kabeladern an die Schneid-Klemm-Kontakelemente des mittleren Leistenkörpers zuerst der obere Leistenkörper von den Zungen abgezogen werden muß. Erst dann ist die Oberseite des mittleren Leistenkörpers zugänglich, um die Kontaktierung der Kabeladern mit den Schneid-Klemm-Kontaktelementen durchzuführen. Spätere Umrangierungen der bereits am mittleren Leistenkörper angeschlossenen Kabeladern sind nicht mehr möglich, da die am oberen Leistenkörper angeschlossenen Kabeladern das Abziehen des oberen Leistenkörpers verhindern. Darüber hinaus sind die seitlichen Zungen zum Aufstecken der drei Leistenkörper als zusätzliche Bauelemente erforderlich.

Der Erfindung liegt von daher die Aufgabe zugrunde, eine Anschlußleiste der gattungsgemäßen Art in einfacherer Bauweise zu schaffen, bei welcher das Anschließen von Kabeladern an die Schneid-Kelmm-Kontaktelemente der Leistenkörper und das Entfernen der Kabeladern von den Schneid-Klemm-Kontaktelementen der Leistenkörper möglich ist, ohne daß ein Leistenkörper die Anschlüsse des anderen Leistenkörpers behindert.

Die Lösung dieser Aufgabe ergibt sich aus den kennzeichnenden Merkmalen des Anspruches 1 Bei der Anschlußleiste ist erfindungsgemäß mindestens ein Leistenkörper mit einer Drehachse versehen, um die der Leistenkörper aus der Anschlußleiste herausschwenkbar ist. Das Herausschwenken dieses Leistenkörpers erfolgt um die Längsachse der Anschlußleiste. Somit wird erreicht, daß die Oberseiten bzw. die Anschalteseiten eines jeden Leistenkörpers zum Anschließen oder Entfernen von Kabeladern frei zugänglich sind. Es können somit Kabeladern angeschlossen, rangiert und entfernt werden, ohne daß sich die Anschalteseiten der beiden Leistenkörper gegenseitig behindern. Außerdem ist die Verwendung weiterer Bauteile, wie insbesondere Aufsteckzungen, nicht mehr erforderlich.

Die Erfindung ist nachfolgend anhand mehrerer, in den Zeichnungen dargestellter Ausführungsbeispiele einer Anschlußleiste näher erläutert.Es zeigen:
- Fig. 1: einen Querschnitt durch die Anschlußleiste in der ersten Ausführungsform,
- Fig. 2: einen Querschnitt durch die Anschlußleiste gemäß Fig. 1 mit ausgeschwenktem unteren Leistenkörper,
- Fig. 3: einen Querschnitt durch die als Trennleiste ausgebildete Anschlußleiste gemäß Fig.1 ,
- Fig. 4: einen Querschnitt durch die Trennleiste gemäß Fig.3 mit ausgeschwenktem unteren Leistenkörper,
- Fig. 5: eine teilweise geschnitten dargestellte Ansicht auf einen Teilbereich der Anschlußleiste nach Fig. 1,
- Fig. 6: eine teilweise geschnitten dargestellte Stirnansicht der Anschlußleiste in der zweiten Ausführungsform,
- Fig. 7: eine Stirnansicht der Anschlußleiste gemäß Fig. 6 mit ausgeschwenktem oberen Leistenkörper,
- Fig. 8: eine teilweise geschnitten dargestellte Stirnansicht der als Trennleiste ausgebildeten Anschlußleiste gemäß Fig. 6,
- Fig. 9: die Trennleiste nach Fig. 8 mit ausgeschwenktem oberen Leistenkörper.

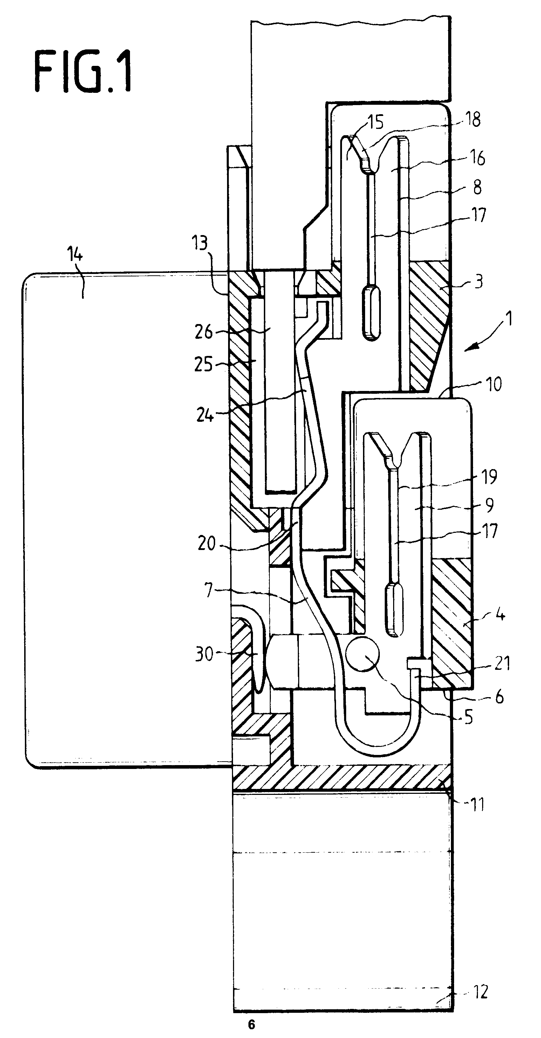

Die in den Figuren 1 bis 5 dargestellte erste Ausführungsform der Anschlußleiste 1 umfaßt einen aus Kunststoff hergestellten Gehäusekörper aus zwei Leistenkörpern 3,4. An der Bodenseite 11 der Anschlußleiste 1 sind bogenförmige Klemmelemente 12 zur Befestigung auf nicht dargestellten, stangenförmigen Führungsschienen ausgebildet. Die Leistenkörper 3,4 nehmen mehrere, in Reihe angeordnete Schneid-Klemm-Kontaktelemente 8,9 auf,die aus einem metallischen Werkstoff bestehen und zwei federnde Kontaktschenkel 15, 16 besitzen, die einen Kontaktschlitz 17 begrenzen. Zur besseren Einführung einer Kabelader in den Kontaktschlitz 17 besitzt jedes Schneid-Klemm-Kontaktelement 8,9 am oberen Ende eine Einführungsschräge 18. Die anzuschließende Kabelader wird von der Oberseite der Leistenkörper 3,4 in das jeweilige Schneid-Klemm-Kontaktelement 8,9 eingeführt und in Richtung auf die Unterseite eines jeden Leistenkörpers 3,4 in den jeweiligen Kontaktschlitz 17 eingedrückt, so daß die scharfen Kanten 19 der Kontaktschenkel 15, 16 die Isolierung der Kabelader einschneiden und in den leitenden Kern der Kabelader eindringen, um eine elektrische Kontaktverbindung zwischen dem Schneid-Klemm-Kontaktelemem nt 8,9 und der Kabelader herzustellen.

Die Fig. 1 zeigt die beiden Leistenkörper 3,4, die in der Anschlußleiste 1 übereinander angeordnet sind. An die Schneid-Klemm-Kontaktelemente 9 des unteren Leistenkörpers 4 werden Kabeladern bzw. Schaltadern der ankommenden Seite angeschlossen. An die Schneid-Klemm-Kontaktelemente 8 des oberen Leistenkörpers 3 werden Kabeladern bzw. Rangieradern der abgehenden Seite angeschlossen. Die elektrische Verbindung zwischen dem Schneid-Klemm-Kontaktelement 8 des oberen Leistenkörpers 3 und dem Schneid-Klemm-Kontaktelement 9 des unteren Leistenkörpers 4 erfolgt über ein Verbindungselement 7 aus einem flexiblen Metallband, dessen Enden 20,21 jeweils mit den Schneid-Klemm-Kontaktelementen 8,9 verbunden sind. Mit dem Verbindungselement 7 ist eine Federzunge 24 verbunden, die in einen Einsteckkanal 25 der Anschlußleiste 1 hineinragt, der zur Aufnahme einer Steckzunge 26 eines Prüfsteckers 27 dient, der nach dem Einstecken über die Federzunge 28 mit den Schneid-Klemm-Kontaktelementen 8,9 elektrisch kontaktiert ist.

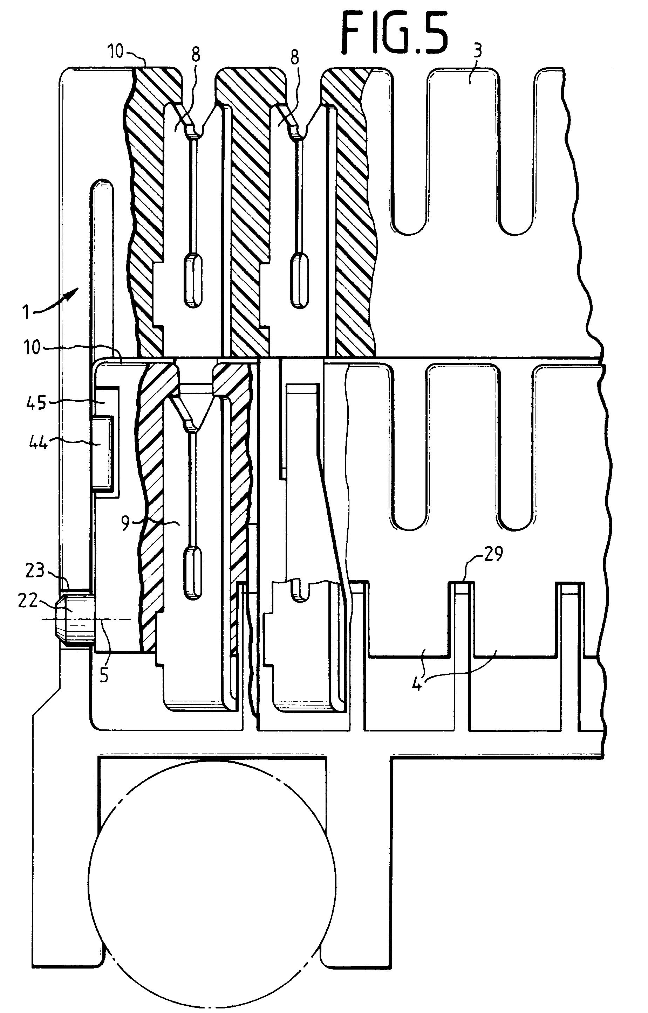

Der untere Leistenkörper 4 besitzt, wie es insbesondere die Fig.5 zeigt, eine Drehachse 5 mit an den Stirnseiten des unteren Leistenkörpers 4 angeordneten Drehzapfen 22, die in Lageröffnungen 23 der Anschlußleiste 1 aufgenommen sind.

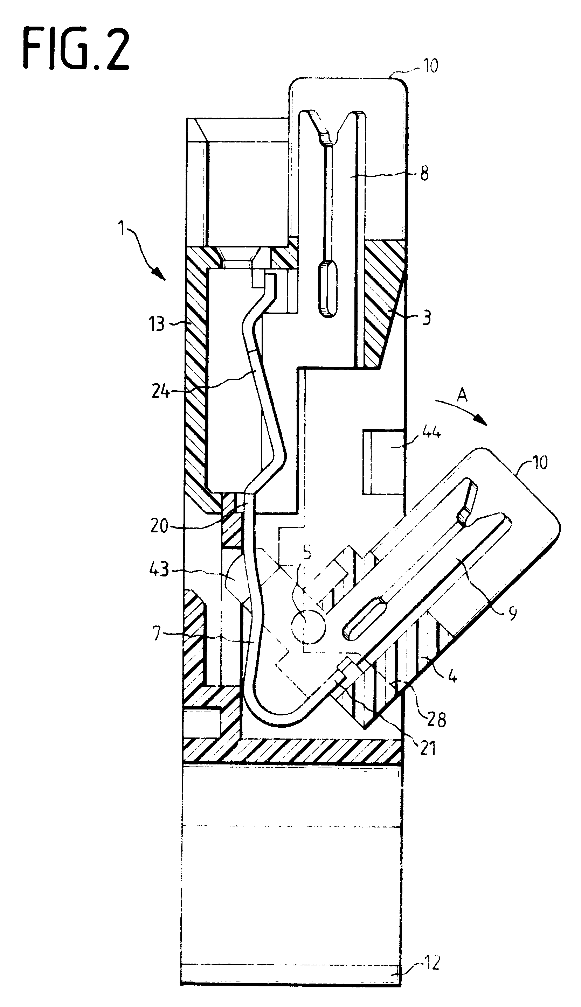

Zum Anschluß der isolierten Kabeladern an die Schneid-Klemm-Kontaktelemente 9 des unteren Leistenkörpers 4 wird dieser, wies es in Fig. 2 dargestellt ist, in Pfeilrichtung A nach vorne aus der Anschlußleiste 1 herausgeschwenkt. Nach dem Auschwenken des unteren Leistenkörpers 4 ist dessen Anschalteseite 10 frei zugänglich, um nun die isolierten Kabeladern in die Kontaktschlitze 17 einzulegen und von oben mittels eines nicht dargestellten Werkzeuges in die Kontaktschlitze 17 einzudrücken. Nach dem Beschalten sämtlicher Schneid-Klemmontaktelemente 9 wird der untere Leistenkörper 4 wieder in die Anschlußleiste 1 hineingeschwenkt, bis er seine in Fig. 1 dargestellte ursprüngliche Lage wieder eingenommen hat. Wie es die Fig. 2 zeigt wird das flexible Verbindungselement 7 aufgrund der Schwenkbewegung des unteren Leistenkörpers 4 in Richtung auf die Rückseite 13 der Anschlußleiste 1 gedrückt. Um ein zu weites Ausschwenken des unteren Leistenkörpers 4 zu verhindern, ist innerhalb der Anschlußleiste 1 ein Anschlag 28 vorgesehen, an den eine Schlitzkante 29 des unteren Leistenkörpers 4 anschlägt. Ein Ansatz 43 dient zur Kontaktierung eines auf der Rückseite 13 der Anschlußleiste 1 angeordneten Überspannungsableitermagazins 14 ( Fig. 1). An den Innenseiten der Innenflächen der in der Anschlußleiste 1 vorgesehenen Aufnahmeöffnung für den unteren Leistenkörper 4 sind Rasthaken 44 angebracht, die nach dem Zurückschwenken des unteren Leistenkörpers 4 in Freimachungen 45 des unteren Leistenkörpers 4 einrasten.

Nach dem Anschließen der ankommenden Kabeladern an die Schneid-Klemm-Kontaktelemente 9 des unteren Leistenkörpers 4 werden die abgehenden Kabeladern an den Schneid-Klemm-Kontaktelementen 8 des oberen Leistenkörpers 3 angeschlossen, der ein festes Bestandteil des Körpers der Anschlußleiste 1 bildet.

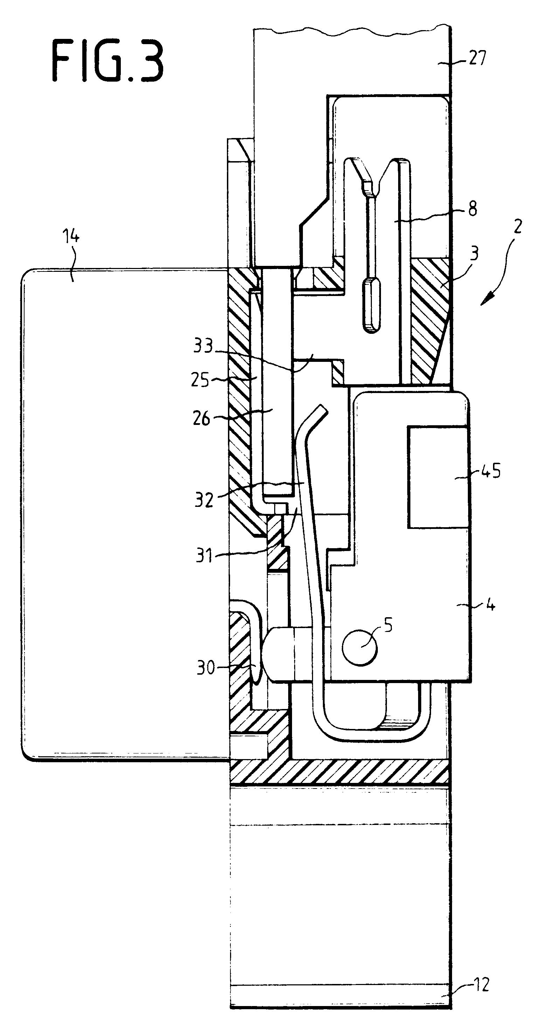

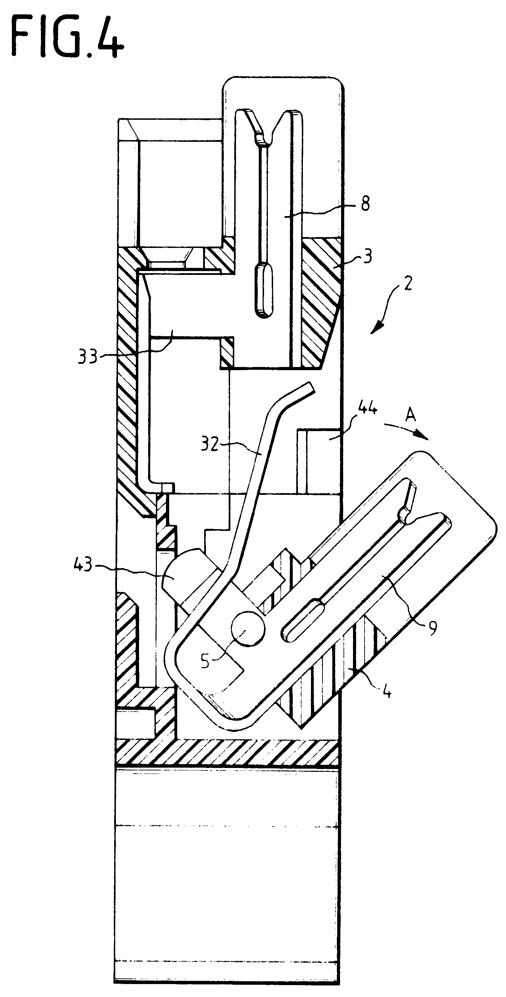

In den Figuren 3 und 4 ist die als Trennleiste 2 ausgebildete Anschlußleiste 1 gemäß der in Fig. 1 gezeigten ersten Ausführungsform dargestellt. Die Trennleiste 2 weist zwischen den Schneid-Klemm-Kontaktelementen 8,9 eine Trennstelle 31 auf, wozu das Schneid-Klemm-Kontaktelement 9 eine Federzunge 32 besitzt, die in den Einsteckkanal 25 hineinragt und die die Steckzunge 26 eines Steckers, insbesondere eines Prüfsteckers 27, kontaktiert. Das Schneid-Klemm-Kontaktelement 8 des oberen Leistenkörpers 3 besitzt eine Kontaktfahne 33, die ebenfalls in den Einsteckkanal 25 hineinragt und die Steckzunge 26 des Prüfsteckers 27 kontaktiert, wenn dieser in die Trennleiste 2 eingesteckt ist. Auch bei der Trennleiste 2 gemäß Figuren 3 und 4 ist der untere Leistenkörper 4 zum Anschluß von Kabeladern nach vorne in Pfeilrichtung A ausschwenkbar, wobei der untere Leistenkörper 4 ebenfalls um die Drehachse 5 geschwenkt wird, wie es in Fig. 4 dargestellt ist.

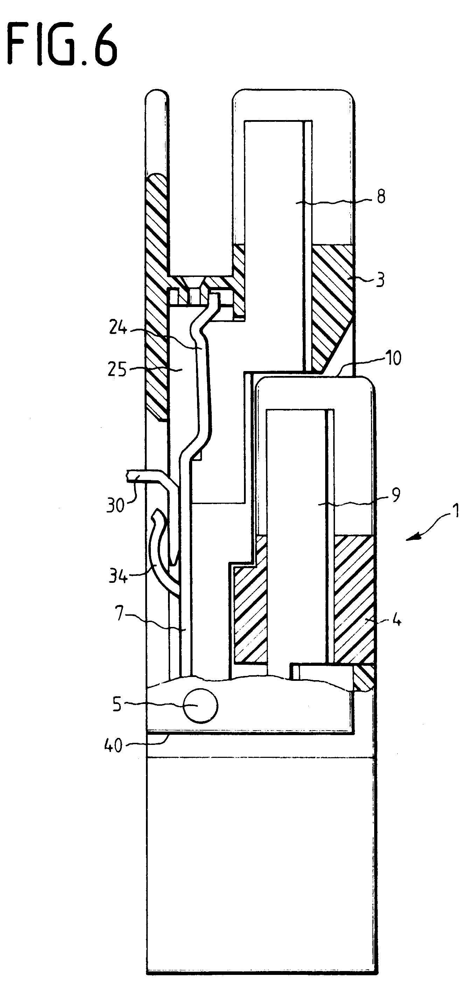

In den Figuren 6 bis 9 ist die zweite Ausführungsform der Anschlußleiste 1 dargestellt. Bei dieser ist im Unterschied zu der voranstehend beschriebenen ersten Ausführungsform der untere Leistenkörper 4 festes Bestandteile der Anschlußleiste 1, wohingegen der obere Leistenkörper 3 um die Schwenkachse 5 schwenkbar ist, um das Anschaltefeld 10 des unteren Leistenkörpers 4 zum Anschluß der isolierten Kabeladern zugänglich zu machen. Die Anschlußleiste 1 gemäß Fig. 6 weist die beiden Leistenkörper 3,4 mit jeweils einer Reihe von Schneid-Klemm-Kontaktelementen 8,9 auf, wobei die beiden Reihen der beiden Leistenkörper 3,4 über das flexible Verbindungselement 7 verbunden sind. Am Schneid-Klemm-Kontaktelement 8 ist die Federzunge 24 vorgesehen, die in den Einsteckkanal 25 hineinragt, welcher im oberen Leistenkörper 3 vorgesehen ist. Die Federzunge 24 ist nach unten verlängert und weist eine Kontaktaufnahme 34 auf, in welche die Kontaktzunge 30 des Überspannungsableitermagazines 14 eingesteckt ist.

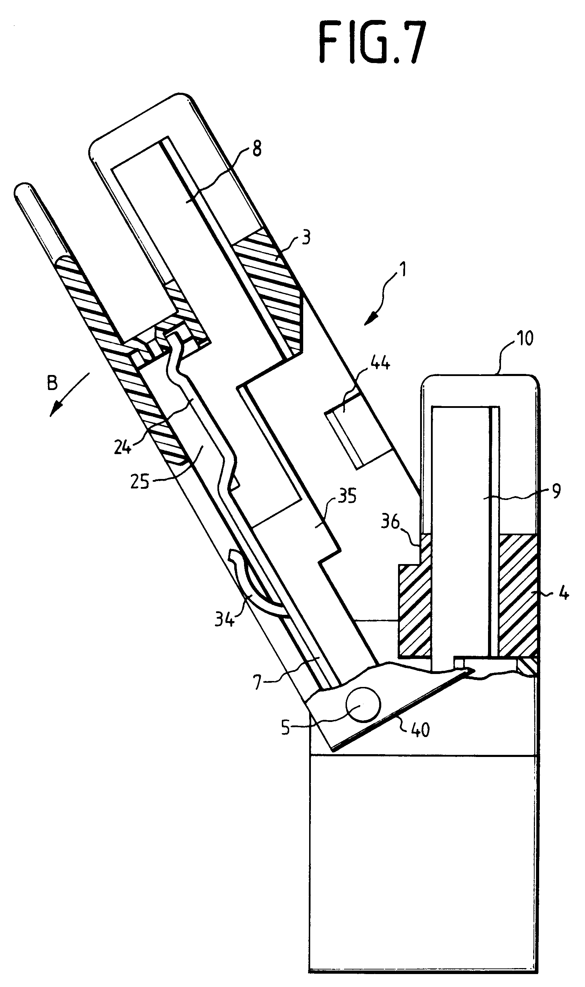

Zum Anschluß der isolierten Kabeladern an den unteren Leistenkörper 4 wird der obere Leistenkörper 3 in Pfeilrichtung B um die Drehachse 5 ausgeschwenkt, wie es in Fig. 7 dargestellt ist. Die Drehachse 5 befindet sich im Bereich der Bodenseite 40 des oberen Leistenkörpers 3. Nach dessen Ausschwenken ist das Anschaltefeld 10 des unteren Leistenkörpers 4 frei zugänglich, so daß die Kabeladern von oben in die Kontaktschlitze 17 des unteren Leistenkörpers 4 eingelegt und mittels eines nicht dargestellten Werkzeuges in die Kontaktschlitze 17 der Schneid-Klemm-Kontaktelemente 9 eingedrückt werden können. Nach dem Anschalten sämtlicher Kabeladern an die Schneid-Klemm-Kontaktelemente 9 des unteren Leistenkörpers 4 wird der obere Leistenkörper 3 zurückgeschwenkt, bis der Anschlag 35 der Aufnahmeöffnung des oberen Leistenkörpers 3 an die Rückwand 36 des unteren Leistenkörpers 4 anschlägt. Der obere Leistenkörper 3 hat nun seine ursprüngliche Lage wieder eingenommen, wobei der obere Leistenkörper 3 mit der Anschlußleiste 1 bzw. mit dem unteren Leistenkörper 4 über die in Freimachungen 45 einrastenden Rasthaken 44 wieder verrastet ist.

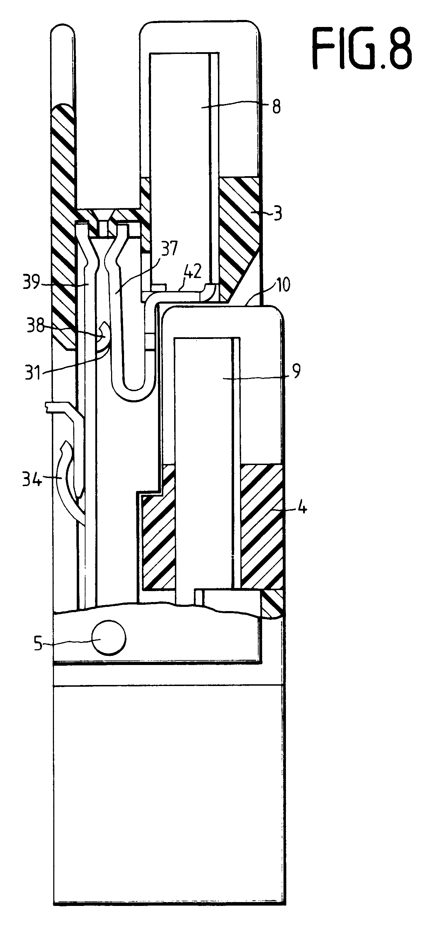

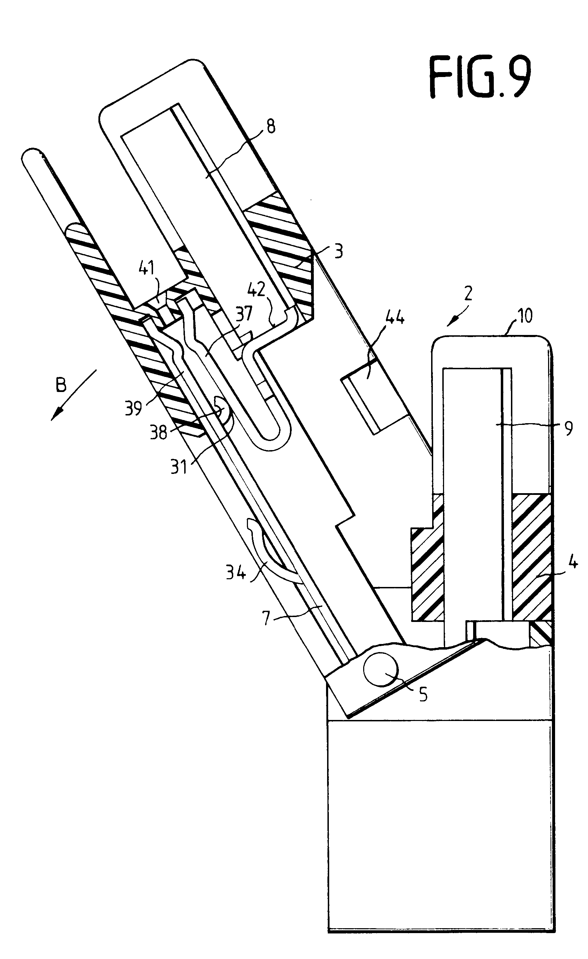

In den Figuren 8 und 9 ist die als Trennleiste 2 ausgebildete zweite Ausführungsform der Anschlußleiste 1 dargestellt. Diese Trennleiste 2 weist ebenfalls zwei Leistenkörper 3, 4 auf, von denen der obere Leistenkörper 3 schwenkbar an der Anschlußleiste 1 bzw. am unteren Leistenkörper 4 angelenkt ist. Das Schneid-Klemm-Kontaktelement 8 des oberen Leistenkörpers 3 weist an seiner Unterseite 42 je eine Kontaktfederzunge 37 auf, die federnd an einem Gegenkontakt 38 anliegt, der mit einem Kontaktschenkel 39 verbunden ist, welcher wiederum über das Verbindungselement 7 mit dem Schneid-Klemm-Kontaktelement 9 des unteren Leistenkörpers 4 verbunden ist. Zwischen dem Gegenkontakt 38 und der Federzunge 37 wird eine Trennstelle 31 gebildet, die mittels eines nicht dargestellten Trennsteckers aufgetrennt werden kann, der durch die Öffnung 41 der Trennleiste 2 einsteckbar ist. Der Kontaktschenkel 39 weist eine Kontaktaufnahme 34 auf, in welche die Kontaktzunge 30 des Überspannungsableitermagazins 14 einsteckbar ist. Wie es die Fig. 9 zeigt ist auch bei der Trennleiste 2 der obere Leistenkörper 3 in Pfeilrichtung B ausschwenkbar, so daß das Anschaltefeld des unteren Leistenkörpers 4 frei zugänglich wird.

Bei der in den Figuren 6 bis 9 dargestellten zweiten Ausführungsform der Anschlußleiste 1 ist es auch möglich, den Drehzapfen 22 in das Lager 23 einsteckbar zu gestalten, so daß der obere Leistenkörper 3 steckbar und drehbar in der Drehachse 5 im unteren Leistenkörper 4 gelagert ist.

## Patentansprüche

1. Anschlußleiste zum Anschluß von isolierten Kabeladern, insbesondere von Kabeladern der Fernmelde- und Datentechnik, mit in Leistenkörpern aufgenommenen und in Reihen angeordneten Schneidklemm-Kontaktelementen,
**dadurch gekennzeichnet,**
daß mindestens ein Leistenkörper (3,4) mit einer Drehachse (5) versehen ist, um die der Leistenkörper (3,4) aus der Anschlußleiste (1) herausschwenkbar ist.

2. Anschlußleiste nach Anspruch 1, dadurch gekennzeichnet, daß die Leistenkörper (3,4) nebeneinander angeordnet sind.

3. Anschlußleiste nach Anspruch 1, dadurch gekennzeichnet, daß die Leistenkörper (3,4) übereinander angeordnet sind.

4. Anschlußleiste nach einem der Ansprüche 1 bis 3, dadurch gekennzeichnet, daß zur elektrischen Verbindung von zwei, in zwei Leistenkörpern angeordneten, Schneidklemm-Kontaktelementen (8,9) ein flexibles Verbindungselement (7) vorgesehen ist.

5. Anschlußleiste nach einem der Ansprüche 1 bis 3, dadurch gekennzeichnet, daß die Drehachse (5) im Bereich der Bodenseite (6) des einen Leistenkörpers (3,4) angeordnet ist.

6. Anschlußleiste nach einem der Ansprüche 1 bis 3, dadurch gekennzeichnet, daß der obere Leistenkörper (3) der Anschlußleiste (1) schwenkbar ist.

7. Anschlußleiste nach einem der Ansprüche 1 bis 3, dadurch gekennzeichnet, daß der untere Leistenkörper (4) der Anschlußleiste (1) schwenkbar ist.

8. Anschlußleiste nach einem der Ansprüche 1 bis 7, dadurch gekennzeichnet, daß die Drehachse (5) einen Drehzapfen (22) aufweist, der in ein Lager (23) einsteckbar ausgebildet ist, so daß der eine Leistenkörper (3,4) steckbar und drehbar im anderen Leistenkörper gelagert ist.

## Claims

1. A terminal block for the connection of insulated cable wires, in particular of cable wires for telecommunication and data systems, comprising insulation displacement contact elements received in block bodies and arranged in lines, characterised by that at least one block body (3, 4) is provided with an axis of rotation (5), about which the block body (3, 4) can be swung out from the terminal block (1).

2. A terminal block according to claim 1, characterised by that the block bodies (3, 4) are arranged side by side.

3. A terminal block according to claim 1, characterised by that the block bodies (3, 4) are arranged on top of each other.

4. A terminal block according to one of claims 1 to 3, characterised by that for the electrical connection of two insulation displacement contact elements (8, 9) disposed in two block bodies, a flexible connection element (7) is provided.

5. A terminal block according to one of claims 1 to 3, characterised by that the axis of rotation (5) is disposed in the area of the bottom side (6) of the one block body (3, 4).

6. A terminal block according to one of claims 1 to 3, characterised by that the upper block body (3) of the terminal block (1) is swingable.

7. A terminal block according to one of claims 1 to 3, characterised by that the lower block body (4) of the terminal block (1) is swingable.

8. A terminal block according to one of claims 1 to 7, characterised by that the axis of rotation (5) comprises a pivot (22) that can be inserted into a bearing (23) and is adapted such that the one block body (3, 4) is insertably and rotatably supported in the other block body.

## Revendications

1. Bloc de connexion pour le raccordement de conducteurs de câble isolés, en particulier de conducteurs de câble pour technique des télécommunications et de l'informatique, comprenant des éléments de contact de coupure et de serrage logés dans de blocs de connexion,
caractérisé en ce qu'au moins un corps de bloc (3, 4) est pourvu d'un axe de rotation (5), autour duquel le corps de bloc (3, 4) peut être pivoté hors du bloc de connexion (1).

2. Bloc de connexion selon la revendication 1,
caractérisé en ce que les corps de bloc (3, 4) sont disposés l'un à côté de l'autre.

3. Bloc de connexion selon la revendication 1,
caractérisé en ce que les corps de bloc (3, 4) sont disposés l'un sur l'autre.

4. Bloc de connexion selon une des revendications 1 à 3,
caractérisé en ce que pour la connexion électrique de deux éléments de contact de coupure et de serrage (8, 9) est prévu un élément de connexion (7) flexible.

5. Bloc de connexion selon une des revendications 1 à 3,
caractérisé en ce que l'axe de rotation (5) est disposé dans la région du fond (6) de l'un corps de bloc (3, 4).

6. Bloc de connexion selon une des revendications 1 à 3,
caractérisé en ce que le corps de bloc supérieur (3) du bloc de connexion (1) est pivotable.

7. Bloc de connexion selon une des revendications 1 à 3,
caractérisé en ce que le corps de bloc inférieur (3) du bloc de connexion (1) est pivotable.

8. Bloc de connexion selon une des revendications à 7,
caractérisé en ce que l'axe de rotation (5) comporte un pivot (22) enfichable dans un coussinet (23), de sorte que l'un corps de bloc (3, 4) soit logé en manière enfichable et tournante dans l'autre corps de bloc.
